# EUROPÄISCHE PATENTANMELDUNG

(11) **EP 1 253 695 A2**
(43) Veröffentlichungstag der Anmeldung: **30.10.2002**
(21) Anmeldenummer: 02100388.4
(22) Anmeldetag: 18.04.2002
(51) Int. Cl.: H02J 5/00

(54) **System zur drahtlosen Übertragung elektrischer Leistung, ein System von Kleidungsstücken und Verfahren zum Übertragen von Signalen und/oder elektrischer Leistung**

(30) Priorität: 20.04.2001 DE 10119283
(71) Anmelder: Philips Corporate Intellectual Property GmbH, 20099 Hamburg (DE); Koninklijke Philips Electronics N.V., 5621 BA Eindhoven (NL)
(72) Erfinder: Elferich, Reinhold, Weisshausstrasse 2, 52066 Aachen (DE); Sauerländer, Georg, Weisshausstrasse 2, 52066 Aachen (DE)
(74) Vertreter: Volmer, Georg, Dipl.-Ing.

(57) **Zusammenfassung**

Die Erfindung beschreibt ein System zur elektrischen Übertragung im Kleidungsbereich und einen entsprechenden Übertrager hierfür. Elektrische Schaltungen in Kleidungsstücken werden mit elektrischen Geräten und/oder elektrischen Schaltungen in anderen Kleidungsstücken drahtlos, bevorzugt induktiv gekoppelt, wobei über die Kopplung elektrische Leistung übertragen wird. Bevorzugt ist Leistungsübertragung in beide Richtungen möglich, wobei ein verteiltes System mit Quellen und Geräten entsteht, die miteinander koppelbar sind. Die Effizienz der induktiven Energieübertragung wird durch Regelung der Frequenz erhöht, bevorzugt unter Ausnutzung einer Resonanz Zusätzlich werden Mittel zur Informationsübertragung vorgeschlagen.

## Beschreibung

Die Erfindung betrifft ein System zur drahtlosen Übertragung elektrischer Leistung, ein Kleidungsstück, ein System von Kleidungsstücken und Verfahren zum Übertragen von Signalen und/oder elektrischer Leistung.

Systeme zur drahtlosen Übertragung von elektrischer Leistung und elektrischen Signalen sind bekannt. Während Signale beispielsweise per Funk, also als elektromagnetische Wechselfelder, auch über lange Strecken übertragen werden, ist für die Übertragung von elektrischer Leistung vor allem die induktive Übertragung bekannt, die üblicherweise lediglich in einem Nahbereich von bis zu 1 m Entfernung eingesetzt wird. Sie beruht auf mindestens zwei magnetisch gekoppelten Induktionselementen, beispielsweise Spulen. Ein an einen Primärkreis angeschlossenes erstes Induktionselement wird mit einer Wechselspannung betrieben, so dass es ein magnetisches Wechselfeld erzeugt. Mindestens ein zweites Induktionselement, beispielsweise eine sekundärseitige Spule, befindet sich zumindest in einem Teil des so erzeugten elektrischen Wechselfeldes, wobei durch die Änderung des magnetischen Flusses in der vom Induktionselement umschlossenen Fläche sekundärseitig eine Spannung induziert wird.

Für die Effizienz einer solchen Leistungsübertragung ist die magnetische Kopplung ausschlaggebend. Wenn beispielsweise Teile des vom primärseitigen Induktionselement erzeugten Magnetfeldes nicht durch den Bereich des sekundärseitigen Induktionselements verlaufen, ist die Kopplung nicht vollständig und man spricht von Streufluss bzw. Streuinduktivität.

Als Systeme zur drahtlosen Übertragung elektrischer Leistung sind Transformatoren weit verbreitet. Bei den meisten herkömmlichen Transformatoren sind die Induktionselemente zueinander fest und unbeweglich angeordnet, beispielsweise in einem Gehäuse oder an einer mechanischen Halterung Der magnetische Fluss wird durch Transformatorkerne geleitet und gebündelt, so dass möglichst nur ein sehr geringer Streufluss auftritt. Eine völlig andere Situation stellt sich allerdings dar, wenn elektrische Leistung zwischen zwei Gegenständen übertragen werden soll, bei denen es ungünstig ist, diese mechanisch fest aneinander anzukoppeln. In diesem Fall ist es schwierig, das magnetische Feld entsprechend zu leiten und zu konzentrieren, so dass es häufig zu Streuverlusten kommt. Die Anordnung der Induktionselemente zueinander ist häufig kritisch.

So beschreibt US-A-5,948,006 ein System zur Übertragung elektrischer Leistung durch die Haut. Ein sekundäres Induktionselement ist unter der Haut implantiert. Ein externes primäres Induktionselement wird außen auf der Haut plaziert und so mit Wechselspannung betrieben, dass durch die induktive Kopplung elektrische Leistung zum Sekundärteil übertragsn wird. Um eine möglichst genaue Anordnung der Induktionselemente zueinander zu erreichen und so eine hohe Effizienz der Übertragung zu gewährleisten, ist eine Anzeige vorgesehen, die die korrekte Positionierung anzeigt. Sekundärseitig wird die induzierte Spannung gleichgerichtet und beispielsweise zum Laden einer Batterie verwendet. Zusätzlich wird auch vorgeschlagen, durch Modulation Informationen zu übertragen.

Ein weiteres System zur drahtlosen Übertragung von elektrischer Leistung ist in US-A-4,692,604 beschrieben. Um eine "Smart-Card" mit elektrischer Leistung zu versorgen, sind auf der Karte und an dem Kartenleser jeweils ein Induktionselement vorgesehen, die bei entsprechender Anordnung der Karte im Kartenleser magnetisch gekoppelt sind Das Dokument geht hierbei davon aus, dass Luftspulen nicht zur Leistungsübertragung ausreichen. Daher wird ein flexibler Kern aus magnetischem Material vorgeschlagen.

Auch US-A-5,883,376 beschreibt ein System zur drahtlosen induktiven Leistungs- und Datenübertragung. Eine primärseitige Antennenspule erzeugt ein magnetisches Wechselfeld, das bei entsprechender Anordnung der sekundärseitigen Spule dort eine Spannung induziert. Die Sekundärspule ist in einem flexiblen Element angeordnet, das zur Markierung und Identifizierung eines Objektes dienen soll. Mit der induzierten Spannung wird ein Datenspeicher betrieben, der eine entsprechende Identifikation ermöglichen soll.

Im Kleidungsbereich spielt der Bereich "wearable electronics" eine zunehmend größere Rolle. Hierbei geht der Trend dahin, elektrische Einheiten in Kleidungsstücke zu integrieren. Dies betrifft einerseits elektrische Geräte wie Mobiltelefone, Audio-Abspielgeräte, Datenspeicher, Lautsprecher bzw. Kopfhörer, Computer, Geräte der medizinischen Diagnostik etc. sowie Bedienungselemente hierfür wie Anzeigen, Tastaturen, Mikrofone, Schalter usw. Andererseits betrifft dies auch elektrische Energiespeicher. So wurden bereits Jacken vorgestellt, in denen ein Mobiltelefon und ein Audio-Abspielgerät integriert ist, wobei diese elektrischen Geräte in entsprechenden Halterungen, beispielsweise Taschen oder anderen Aufnahmen, befestigt sind Üblicherweise können die Geräte bei Bedarf entnommen werden. Die Geräte sind untereinander mit innerhalb der Jacke integrierten Verbindungskabeln verbunden. Der Anschluss der Geräte erfolgt über Stecker und Leitungen.

Es ist Aufgabe der Erfindung die bekannten Kleidungsstücke so zu verbessern, dass elektrische Anschlüsse für elektrische Geräte, Energiespeicher oder andere elektrische Einheiten besonders leicht herzustellen sind Weiter ist es Aufgabe der Erfindung, bekannte Systeme zur drahtlosen Übertragung so zu verbessern, dass eine effiziente Übertragung auch bei beweglichen Induktionselementen möglich ist.

Diese Aufgabe wird gelöst durch ein System zur drahtlosen Übertragung elektrischer Leistung nach Anspruch 1, ein Kleidungsstück nach Anspruch 10, ein System von Kleidungsstücken nach Anspruch 17 und ein Verfahren nach Anspruch 18. Abhängige Ansprüche beziehen sich auf vorteilhafte Ausführungsformen der Erfindung.

Bei einem erfindungsgemäßen System zur drahtlosen Übertragung elektrischer Leistung sind zwei Induktionselemente vorgesehen, beispielsweise Leitungsschleifen, Spulen oder andere Elemente, die ein magnetisches Feld erzeugen können. Die Induktionselemente sind nicht räumlich fest zueinander angeordnet. Sie können beispielsweise an zwei völlig getrennten Gegenständen angebracht sein; es ist auch denkbar, dass die Induktionselemente an beweglich miteinander verbundenen Gegenständen angebracht sind, beispielsweise Tür und Türrahmen.

Hierbei ist das erste Induktionselement an einem Primärkreis und das zweite Induktionselement an einem Sekundärkreis angeschlossen. Diese Bezeichnungen für elektrische Schaltungen werden zunächst hier rein funktional gewählt für die Übertragung von elektrischer Leistung vom ersten zum zweiten Induktionselement. Wie später erläutert wird, kann bei entsprechender Konstruktion die Richtung der Leistungsübertragung durchaus umgekehrt werden, wobei dann das zweite Induktionselement im Primärkreis und das erste Induktionselement im Sekundärkreis angeordnet ist.

Zur Übertragung elektrischer Leistung müssen die Induktionselemente so positioniert werden, dass sie magnetisch gekoppelt sind. Dies betrifft vor allem den Abstand zwischen den Elementen. Theoretisch sind hierbei die magnetischen Felder zwar unendlich groß, in der Praxis muss jedoch davon ausgegangen werden, dass eine Leistungsübertragung nur im Nahbereich sinnvoll sein wird. Bevorzugt werden Anordnungen, bei denen der Abstand der Induktionselemente höchstens im Bereich von deren Ausdehnung ist, besonders bevorzugt der Abstand klein gegenüber der Ausdehnung (z.B. Länge) ist. So wird das Nahfeld der Induktionselemente ausgenutzt. Es ist allerdings zu beachten, dass die magnetische Kopplung nicht allein vom Abstand sondern auch von der Richtung der relativen Anordnung abhängt. Unter "magnetisch gekoppelt" wird hier daher nur eine solche Anordnung verstanden, bei der die Streuinduktivität des entstandenen Transformators nicht mehr groß gegenüber der Hauptinduktivität ist. Bevorzugt liegt das Verhältnis von Streu- zu Hauptinduktivität im Bereich 1:1 bis 10:1.

Beim Betrieb des primären Induktionselements mit Wechselspannung wird bei entsprechender magnetischer Kopplung im zweiten Induktionselement eine Wechselspannung induziert. Erfindungsgemäß ist die primärseitig verwendete Wechselspannung einstellbar. Dem Fachmann sind eine Vielzahl von Schaltungen bekannt, mit der Wechselspannungen einer gewünschten Frequenz und Wellenform erzeugt werden können, auch aus einer Gleichspannungsversorgung. Unter "Wechselspannung" werden hier nicht nur sinusförmige Spannungsverläufe, sondern jede Form von nicht konstanten, zumindest annähernd periodischen Spannungsverläufen bezeichnet. Die Erfindung ist auch nicht auf einen bestimmten Frequenzbereich beschränkt. So ist Leistungsübertragung schon bei geringen Frequenzen ab 50 Hz möglich. Aufgrund der Verluste werden aber höhere Frequenzbereiche von einigen kHz, z.B. 5-10 kHz bis weit in den MHz-Bereich bevorzugt. Eine hohe Spulengüte wird bei Luftspulen beispielsweise im Bereich von etwa 1 MHz erzielt.

Ebenso ist die Erfindung nicht auf bestimmte Spannungsbereiche beschränkt. Bei den Anwendungen im Kleidungsbereich sollen bevorzugt Spannungseffektivwerfe von ca. 40 V nicht überschritten werden. Das Übertragungsverhältnis ist beispielsweise 1:1, in einem konkreten Anwendungsfall kann aber je nach benötigter Spannungsversorgung auf der Sekundärseite auch ein anderes Verhältnis Anwendung rinden.

Gemäß einer maßgeblichen Weiterbildung der Erfindung ist mindestens der Primärkreis als Resonanzkreis ausgelegt. Hierfür ist zusätzlich zum Induktionselement mindestens eine Kapazität vorgesehen, so dass eine Resonanzanordnung gebildet wird. Bei einer solchen Resonanzanordnung tritt im Bereich einer entsprechenden Resonanzfrequenz eine gewünschte Spannungsüberhöhung am Induktionselement auf, so dass mehr Leistung über die induktive Kopplung übertragen werden kann. Die Einstellbarkeit der Versorgungsspannungsfrequenz ermöglicht es, gezielt von dieser Resonanz Gebrauch zu machen. Eine derartige Technik wird als multiresonanter Umrichter bezeichnet ("Multi" weist hier darauf hin, dass mehr als zwei reaktive Elemente vorhanden sind und deshalb auch mehrere Eigenfrequenzen auftreten). Als reaktive Elemente treten die Kapazität und die Induktivitäten der beiden Induktionselemente auf. Diese können beispielsweise in einem der bekannten Transformator-Ersatzschaltbilder als mehrere Induktivitäten dargestellt werden (darunter eine Haupt- und mindestens eine Streuinduktivtät). Somit wird ein gewisses Maß an Streuinduktivität hier sogar - zur Bildung einer Resonarannordnung - ausgenutzt.

Hierbei liegt die Überlegung zugrunde, dass mechanisch nicht fest miteinander verbundene Induktionselemente ein je nach Lage unterschiedliches Maß an Streuinduktivität aufweisen werden. Die jeweiligen Werte von Haupt- und Streuinduktivität(en) bestimmen hierbei maßgeblich die Resonanzfrequenzen. Bevorzugt wird daher eine Regelung, die bei Änderung des jeweiligen Grads der magnetischen Kopplung und damit der sich ergebende Wert der Haupt- und Streuinduktivität die sekundärseitige Spannung dennoch auf einen gewünschten Betrag regelt. Stellgröße ist hierbei die primärseitige (Anregungs-) Frequenz.

Eine solche Regelung ist insbesondere dann vorteilhaft, wenn der Grad der magnetischen Kopplung zeitlich nicht konstant ist. Dies ist beispielsweise beim Einsatz eines erfindungsgemäßen Systems im Kleidungsbereich zu erwarten, wo sich durch Bewegungen des Trägers die Induktionselemente relativ zueinander verschieben können. Hierdurch ändern sich auch die Resonanzfrequenzen. Dem wird Rechnung getragen durch eine entsprechende Regelung, die die induzierte Spannung auf der Sekundärseite misst und durch Veränderung der Anregungsfrequenz des ersten Induktionselements die Resonanzüberhöhung gezielt ausgenutzt. So kann eine gewünschte Effektivität der Leistungsübertragung auch bei Positions- und Lageänderungen der Induktionselemente zueinander beibehalten werden.

Diese Regelung kann den jeweiligen Grad der magnetischen Kopplung - direkt oder indirekt - ermitteln und Änderungen ausregeln. Hierbei ist es möglich, ein "primary side sensing" einzusetzen, d.h. dass allein von der Primärseite aus den für die Regelung notwendigen Größen ermittelt werden. Aufgrund des Verhaltens des primärseitigen Eingangstores sind bei bekannten Verhältnissen auf der Sekundärseite entsprechende Rückschlüsse über die Kopplung möglich.

Bevorzugt wird aber, dass sekundärseitig ein Sollwert für die Spannung vorgegeben ist, eine Regelabweichung ermittelt wird und als Information an die primärseitige Steuer- bzw. Regeleinheit übermittelt wird. Hierfür können die verschiedenen unten erläuterten Mittel zur Übertragung genutzt werden, um Informationen über die magnetische Kopplung, die sekundärseitige Spannung oder die Regelabweichung zu übermitteln.

Gemäß einer Weiterbildung wird die im Sekundärkreis induzierte Spannung gleichgerichtet. Dies kann über sämtliche dem Fachmann bekannten Gleichrichtungsvorrichtungen, insbesondere Diodengleichrichter geschehen. Bei Diodengleichrichtern sind allerdings die durch die Flussspannung der Dioden auftretenden Verluste zu berücksichtigen, die bei den zum Teil geringen induzierten Spannungen im Bereich von wenigen Volt deutlich nachteilige Effekte haben. Daher werden sog. Synchrongleichrichter bevorzugt, nämlich getaktete Schalter, die jeweils durch Umschalten in den Nulldurchgängen die Wechselspannung gleichrichten, so dass Verluste vergleichbar einer Flussspannung minimiert werden.

Als Synchrongleichrichter werden durch eine Steuerung ansteuerbare Halbleiterschalter bevorzugt. Eine solche Schaltung ist aber auch dazu geeignet, im Primärkreis aus einer zugeführten Versorgungsgleichspannung die Induktionswechselspannung zu erzeugen, mit der das erste Induktionselement betrieben wird. Gemäß einer Weiterbildung der Erfindung wird daher vorgeschlagen, derartige gesteuerte Schaltanordnungen sowohl am ersten als auch am zweiten Induktionselement vorzusehen. Bei einer solchen Anordnung kann elektrische Leistung sowohl vom ersten zum zweiten Induktionselement als auch umgekehrt übertragen werden. Bevorzugt wird die Schaltung hierbei sogar vollständig symmetrisch aufgebaut, so dass bei der Übertragung in beide Richtungen dieselben Bedingungen gelten. Je nach Übertragungsrichtung kann dann das erste oder das zweite Induktionselement als Primärkreis arbeiten, wobei die damit verbundenen getakteten Schalter aus einer Versorgungsgleichspannung eine Wechselspannung erzeugen. Das andere Induktionselement ist ein Teil des Sekundärkreises, wobei die dortige gesteuerte Schaltanordnung dann als Synchrongleichrichter arbeitet.

Als Weiterbildung wird vorgeschlagen, Mittel zur drahtlosen Übertragung von Informationen vorzusehen. An Informationen, die übertragen werden sollen, kommen die verschiedensten Signale in Frage. Insbesondere können die Übertragungsmittel zur Übertragung von Informationen (z.B. Regelabweichung) für die Regelung dienen. Wenn davon ausgegangen werden kann, dass sich die primär- und sekundärseitigen Elemente nur langsam bewegen, ändert sich auch die magnetische Kopplung nur langsam, so dass die zu übertragenden Informationen schmalbändig sind.

Die Übertragungsmittel umfassen beispielsweise Mittel zur Modulation und Demodulation, mit denen die übertragene Wechselspannung als Informationsträger genutzt wird Ebenso ist der Einsatz von Funksendern und -empfängern denkbar. Wegen der zu erwartenden Störungen werden aber Übertragungswege bevorzugt, die von der Leistungsversorgung unabhängig sind.

Dies umfasst zum einen induktive Übertragung über zusätzliche Induktionselemente, die zu den ersten und zweiten Induktionselementen orthogonal sind. Unter "orthogonal" wird hier verstanden, dass die zwischen den zusätzlichen Induktionselementen übertragenen Signale im wesentlichen durch die Leistungsübertragung unbeeinflusst sind. Eine solche Unabhängigkeit kann z.B. einerseits erzielt werden, indem die zusätzlichen Induktionselemente von den ersten und zweiten Induktionselementen ausreichend weit entfernt oder abgeschirmt sind. Andererseits ist es auch möglich, eine solche geometrische Anordnung zu wählen, dass obwohl die zusätzlichen Induktionselemente in der Nähe der ersten und zweiten Induktionselemente angebracht oder diesen sogar unmittelbar überlagert sind, sie mit diesen im wesentlichen nicht induktiv gekoppelt sind, wobei keine wesentlichen Feldkomponenten des durch die ersten und zweiten Elemente verlaufenden Wechselfeldes durch die zusätzlichen Induktionselemente verlaufen. Eine solche mögliche Lösung ist auch eine Anordnung der zusätzlichen Induktionselemente, bei der sich in den jeweiligen Bereichen die Feldkomponenten der ersten und zweiten Induktionselemente auslöschen.

Alternativ wird Informationsübertragung über eine kapazitive Kopplung vorgeschlagen. Hierfür sind ausreichend große Flächen notwendig, die so nah zueinander angeordnet werden, dass ein ausreichendes kapazitives Übersprechen auftritt. Wenn entsprechend große Flächen im Bereich der wechselnden Magnetfelder angeordnet sind, könnte es aber zu Wirbelstromverlusten kommen, insbesondere bei höheren Frequenzen. Daher wird vorgeschlagen solche Flächen zu bilden, bei denen Wirbelstromverluste minimiert sind. Bevorzugt wird hierbei eine Lösung, bei denen die Flächen aus elektrisch gegeneinander isolierten länglichen Bereichen bestehen, wobei die Bereiche an zumindest einem Ende elektrisch miteinander verbunden sind, so dass beispielsweise eine Fingerstruktur entsteht. Wird eine solche Struktur beispielsweise als Leiterbahnen auf eine Trägerfläche aufgebracht, können derartige Strukturen auf beiden Seiten überlappend angeordnet sein, so dass im wesentlichen die Funktion einer geschlossenen Fläche entsteht, aber Wirbelstromverluste minimiert sind.

Bei der Ausgestaltung des erfindungsgemäßen Kleidungsstücks liegt die Erkenntnis zugrunde, dass für die im Kleidungsbereich bestehenden Anforderungen und Nutzungsbedingungen Verbindungen über Kabel und Stecker nachteilig sind. Einerseits ist es unpraktisch, wenn jedes Gerät erst einmal mit dem elektrischen System des Kleidungsstücks verbunden werden muss. Stecker und Kabelenden unterliegen zudem einem gewissen Verschleiß. Insbesondere wenn verschiedene Kleiderstücke jeweils elektrische Schaltungen enthalten die gekoppelt werden sollen, sind Steckersysteme äußerst unpraktisch.

Daher weist ein erfindungsgemäßes Kleidungsstück eine Anschlussvorrichtung für den drahtlosen Anschluss von elektrischen Einheiten auf. Der Begriff "Kleidungsstück" bezeichnet hierbei jede Form von Ausrüstung, die - direkt oder indirekt - am Körper getragen wird, insbesondere Oberbekleidung, Kopfbedeckungen, Schuhe, Gürtel, Brillen, Jacken, Hosen etc. Kleidungsstücke können aus den verschiedensten Materialien, darunter Kunststoffe, Leder, Textilien, Gummi aber auch Metall gefertigt sein.

Ein solches Kleidungsstück weist erfindungsgemäß eine Anschlussvorrichtung für eine oder mehrere elektrische Einheiten auf. Unter einer elektrischen Einheit werden in diesem Zusammenhang die oben bezeichneten elektrischen Geräte, Bedienungselemente und elektrische Energiespeicher verstanden, aber auch andere elektrische Schaltungen.

Das Kleidungsstück selbst weist hierbei eine elektrische Schaltung auf, die im einfachsten Fall auch lediglich aus einer Leitungsverbindung bestehen kann. Ebenso kann das Kleidungsstück bereits fest integrierte elektrische Einheiten aufweisen, die mit seiner Schaltung verbunden sind, beispielsweise folienförmige, fest integrierte Energiespeicher oder Bedienelemente und Anzeigen.

Die erfindungsgemäße Anschlussvorrichtung ist mit der Schaltung des Kleidungsstücks verbunden. Sie dient zur Ankopplung eine elektrischen Einheit, die ihrerseits mit einer entsprechenden Anschlussvorrichtung versehen ist. Die Ankopplung geschieht hierbei drahtlos, wobei elektrische Leistung und/oder elektrische Signale übertragen werden können. Dies hat den Vorteil, dass das manuelle Herstellen einer Verbindung entfällt, beispielsweise das Einstechen eines Steckers. Es sind auch keine exponierten mechanischen Anschlüsse mehr vorhanden, die dem Verschleiß unterliegen.

Gemäß einer Weiterbildung ist die Anschlussvorrichtung so ausgebildet, dass sie eine induktive Kopplung zu einer entsprechenden Geräteanschlussvorrichtung herstellen kann. Hierfür weist sie mindestens ein erstes Induktionselement auf, beispielsweise eine Spule, eine Drahtschleife oder eine andere Form von Induktor, der ein magnetisches Feld erzeugt, wenn er von elektrischem Strom durchflossen wird.

Besonders bevorzugt ist es, auch eine Aufnahme zur Halterung eines elektrischen Geräts vorzusehen, in der das Gerät mechanisch gehalten wird. Da die induktive Leistungsübertragung nur im Nahbereich ausreichende Effizienz aufweist, ist die Kombination einer solchen mechanischen Halterung mit einem nah daran angebrachten Induktionselement sehr vorteilhaft. Hierbei wird darauf geachtet, dass das Induktionselement so positioniert ist, dass das in der Aufnahme gehaltene elektrische Gerät bzw. dessen zweites Induktionselement im Bereich des vom ersten Induktionselement erzeugten magnetischen Feldes liegt, so dass die beiden Induktionselemente induktiv gekoppelt sind. Handelt es sich bei der Aufnahme beispielsweise um eine Tasche oder einen Halteriemen, so kann der Benutzer das elektrische Gerät einfach in die Tasche oder Halterung einstechen. Weist das elektrische Gerät eine entsprechende induktive Geräteanschlussvorrichtung mit einem zweiten Induktionselement auf, so ist - je nach Ausgestaltung der Induktionselemente ggf. bei entsprechender Ausrichtung - sichergestellt, dass eine ausreichende magnetische Kopplung gegeben ist.

Am Kleidungsstück können andere elektrische Einheiten angeschlossen sein, darunter elektrische Geräte und/oder Energiespeicher sowie auch weitere Anschlussvorrichtungen zur induktiven Ankopplung an entsprechende Gegenstücke. Es wird bevorzugt, dass innerhalb des Kleidungsstückes diese Elemente mit elektrischen Leitungen verbunden sind. Entsprechende Leitungen können beispielsweise im textilen Gewebe eines Kleidungsstücks eingewebt sein, so dass sie einen Teil des Kleidungsstücks bilden. Ebenso können Leitungen im Inneren des Kleidungsstücks z.B. zwischen zwei Textilschichten verlaufen. So sind die Verbindungen zwischen elektrischen Funktionselementen für die Benutzung nicht störend und unterliegen auch keiner mechanischen Beanspruchung.

Für das Induktionselement wird bevorzugt, dass es mechanisch flexibel ist. Dies ist bei Kleidungsstücken aus festem Material, wie beispielsweise den Absätzen von Schuhen oder den Bügeln einer Brille nicht notwendig Im Falle von textilen Kleidungsstücken, beispielsweise Jacken, ist es aber besonders vorteilhaft, wenn ein mechanisch flexibler Induktor verwendet wird, der sich mechanisch weitgehend wie das Textilmaterial verhält und so die Trageeigenschaften z.B. einer Jacke nicht wesentlich beeinflusst. Bevorzugt werden hierbei flächige Ausführungsformen, beispielsweise Laminate aus dünnen Polyamid-Schichten mit Leiterschichten aus Metall. Beispielsweise Kupferschichten einer Dicke von 10-50 µm, bevorzugt etwa 35 µm, sind hierfür geeignet. Hierbei können die verschiedensten Induktionsstrukturen gebildet werden, was sowohl geschlossene Ringe (Spulen) als auch offene Strukturen umfasst. Beispielsweise im Bereich einer Tasche oder um einen Jackenärmel herum können geschlossene Spulen, beispielsweise als Axialfeldwicklungen oder Axial-Radialfeldwicklungen Verwendung finden. Offene Strukturen, die nicht notwendigerweise einen Ring bilden, in dem das hierdurch erzeugte magnetische Feld konzentriert ist, umfassen beispielsweise Radialfeldwicklungen. Entsprechende Strukturen sind anhand des Ausführungsbeispiels dargestellt.

Ein erfindungsgemäßes Kleidungsstück kann auch Teil eines Systems sein, bei dem zwischen zwei Kleidungsstücken elektrische Energie drahtlos übertragen werden soll. Hierbei sind die Anschlussstücke, bevorzugt Induktionselemente, speziell so angeordnet, dass beim gleichzeitigen Tragen zweier Kleidungsstücke eine Übertragung stattfinden kann. Dies ist dann vorteilhaft, wenn die Effizienz der Übertragung von der relativen Lage der Anschlusselemente zueinander, insbesondere vom Abstand, abhängt. Das ist der Fall für induktive Leistungsübertragungen. Hierbei wird erfindungsgemäß ausgenutzt, dass Kleidungsstücke in weitgehend definierter Lage am menschlichen Körper getragen werden. Somit liegt auch die relative Lage zweier Kleidungsstücke, beispielsweise Hemd und Hose oder übereinander getragene Jacke und Pullover, zueinander weitgehend fest. Somit ist es möglich, Stellen an den Kleidungsstücken auszuwählen, die in der Tragsposition der Kleidungsstücke eine solche Lage zueinander haben, dass die hier angeordneten Anschlusselemente die Leistungsübertragung ermöglichen. Beispielsweise für die induktive Leistungsübertragung von einer Jacke zu einem darunter getragenen Pullover können die koaxial ineinander getragenen Ärmel der beiden Kleidungsstücke dienen. Spulen, deren Wicklungen an einer festgelegten Stelle, beispielsweise in der Mitte der Ärmel oder sogar über fast die gesamte Länge der Ärmel angeordnet sind, weisen zwangsläufig einen relativ hohen Grad magnetischer Kopplung auf. Ebenso sind eine Vielzahl anderer Übergangsstellen denkbar, beispielsweise zwischen Hemd und Hose, Hemdkragen und Brillenschnur, Hose und Schuhen etc.

Nachfolgend wird die Erfindung anhand der Zeichnungen näher beschrieben. In den Zeichnungen zeigen:
- Fig. 1: eine symbolische Darstellung eines Übertragungssystems mit zwei Induktionselementen;
- Fig. 2: ein Schaltbild des Übertragungssystems;
- Fig 2a: ein Ersatzschaltbild eines Transformators;
- Fig. 3: ein Kleidungsstück mit einer elektrischen Schaltung und induktiven Anschlussvorrichtungen;
- Fig. 4: ein elektrisches Gerät in einer symbolischen, perspektivischen Darstellung;
- Fig. 5: ein Blockschaltbild des Geräts aus Fig. 4;
- Fig. 6: zwei Kleidungsstücke mit einem Übertragungssystem;
- Fig. 7: eine perspektivische Darstellung der Induktionselemente eines Übertragungssystems;
- Fig. 8: eine Axialfeldwicklung;
- Fig. 9: eine Axial-Radialfeldwicklung;
- Fig. 10: ein Übertragungssystem aus Radialfeldwicklungen;
- Fig. 11: in einer Abwicklung die Topologie der Radialfeldwicklungen aus Fig. 10;
- Fig. 12: in einer symbolischen Darstellung die Elemente eines Übertragungssystems;
- Fig. 13: in einer Abwicklung die Topologie eine Axialfeldwicklung mit orthogonaler Wicklung zur Übertragung von Informationen;
- Fig. 14: eine Fingerstruktur einer kapazitiven Kopplungsfläche.

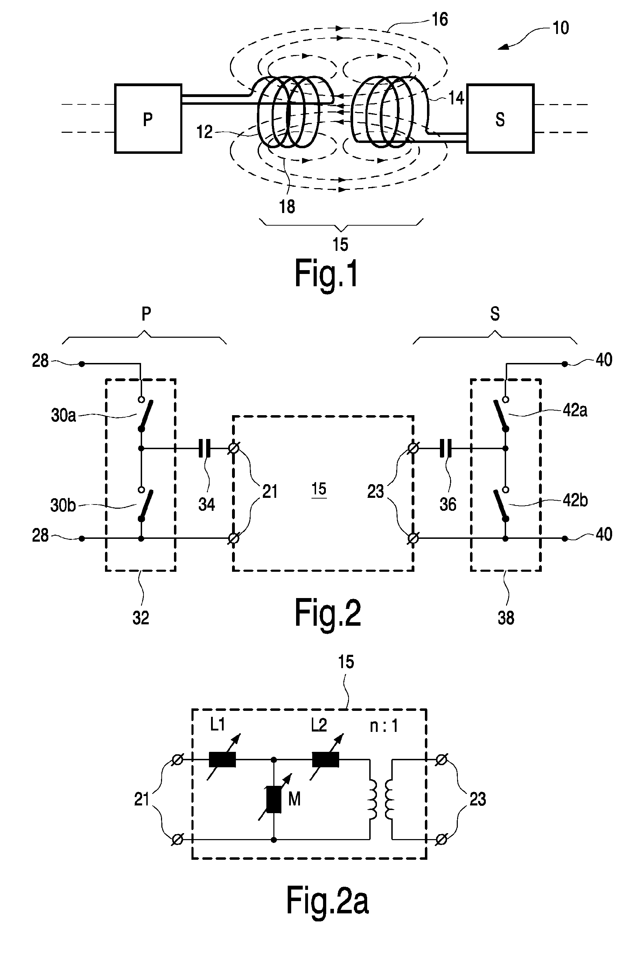

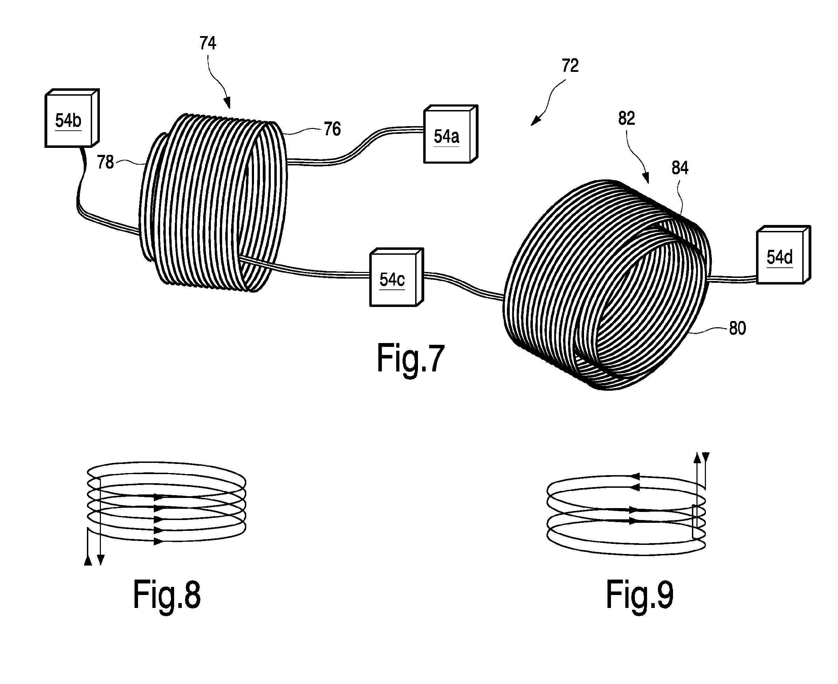

In Fig. 1 ist ein Übertragungssystem 10 zur induktiven Übertragung elektrischer Leistung dargestellt. Eine Primärschaltung P mit einem primären Induktionselement 12 ist mit einer Sekundärschaltung S mit einem Induktionselement 14 verbunden. Die symbolisch dargestellten Induktionselemente 12, 14 bilden einen Transformator 15. Sie sind nah zueinander angeordnet und zueinander so ausgerichtet, dass sie sich in magnetischer Kopplung befinden, d.h. dass das vom primären Induktionselement 12 erzeugte magnetische Feld 16 bis auf ein Streufeld 18 vom sekundären Induktionselement 14 umschlossen ist. Entsprechende physikalische Repräsentationen für die hier nur symbolisch angedeuteten Induktionselemente und deren Felder werden im Zusammenhang mit den Fig. 7 bis 11 beschrieben. Das Übertragungsverhältnis beträgt bevorzugt 1:1.

In Fig. 2 ist ein Schaltbild des Übertragungssystems aus Fig. 1 dargestellt. Der Transformator 15 ist hier als Vierpol dargestellt mit Primäranschlüssen 21 und Sekundäranschlüssen 23. In Fig. 2a ist - als eine der möglichen Ersatzschaltbilder - das T-Ersatzschaltbild eines Transformators dargestellt. Die Wahl des Ersatzschaltbildes ist beliebig und ohne weitere Bedeutung Allen Ersatzschaltungen ist eigen, dass eine Äquivalenz zur physikalischen Anordnung nur bezüglich des Klemmenverhaltens gilt. Die Induktionselemente 12, 14 sind hier durch eine Hauptinduktivität M repräsentiert (die auf den Anteil des magnetischen Feldes 16 zurückgeht, der durch beide Induktionselemente verläuft). Die Streuanteile 18 des magnetischen Feldes sind als primäre Streuinduktivität L₁ und sekundäre Streuinduktivität L₂ repräsentiert. Diese induktivitäten M, L₁, L₂ sind als veränderliche Elemente dargestellt, da sie sich bei einer relativen Lageänderungen der Elemente 12, 14 zueinander verändern.

Der Primärkreis P wird an Anschlüssen 28 mit einer Gleichspannung versorgt. Eine Zerhacker-Einheit 32 weist Schalter 30a, 30b auf, mit denen die Eingangsgleichspannung zwischen den Anschlüssen 28 in eine Wechselspannung umgsformt wird. Der Aufbau der Zerhacker-Einheit 32 kann entsprechend den jeweiligen Anforderungen auf mehrere dem Fachmann bekannte Arten realisiert werden. Hier handelt es sich um gesteuerte HalbleiterSchalter (MOSFETs), die von einer - hier nicht dargestellten - Steuerungseinheit gesteuert werden. Zur Erzeugung einer Wechselspannung schalten sie periodisch im Wechsel mit einer von der Steuerungseinheit vorgsgsbenen Frequenz.

Mit der durch die Zerhacker-Einheit 32 erzeugten Wechselspannung wird der aus einer Kapazität 34 und den Induktivitäten L₁, M und L₂ im Primärkreis gebildete Serienresonanzkreis betrieben. Durch die Resonanzanordnung ergeben sich auch bei rechteckförmiger Anregung stückweise sinusförmige Verläufe. Bei einem Serienresonanzkreis tritt in der Nähe von Resonanzfrequenzen eine starke Spannungsüberhöhung an den Induktivitäten auf. Diese Spannungsüberhöhung wird ausgenutzt, um gezielt die Übertragung von Leistung über die gekoppelte Induktivität 11 vom Primär- in den Sekundärkreis zu regeln.

Hierbei wird so vorgegangen, dass das System grundsätzlich in einem Frequenzbereich arbeitet, der oberhalb der Resonanzfrequenzen liegt. Dies kann von der Primärseite aus überprüft werden, indem das Torverhalten an den primärseitigen Anschlüssen 21 beobachtet wird. Zeigt dieses ein induktives Verhalten, so kann daraus gefolgert werden, dass es überkritisch, d.h. oberhalb der Resonanzfrequenzen angeregt ist. Zeigt es ein kapazitives Verhalten, so berindet man sich im Bereich unterhalb der Resonanzfrequenzen

Wenn der Betrieb grundsätzlich bei Frequenzen oberhalb der Resonanz erfolgt, kann die Regelung leicht auf ein Absinken der sekundärseitigen Spannung dadurch reagieren, dass die primäre Frequenz gesenkt wird. Dadurch nähert man sich der Resonanzfrequenz, so dass eine stärkere Spannungsüberhöhung auftritt und die sekundärseitige Spannung steigt. Umgekehrt kann die sekundärseitige Spannung abgesenkt werden, indem die primärseitige Frequenz erhöht wird, so dass man sich weiter von der Resonanzfrequenz entfernt.

Durch die Kopplung der Induktivität M wird eine Wechselspannung im Sekundärkreis S induziert. Der Sekundärkreis S weist ebenfalls eine Kapazität 36 auf. Die Spannung über diese Kapazität und die Induktivitäten wird einem Synchrongleichrichter 38 zugeleitet. Der Synchrongleichrichter 38 weist Schalter 42a, 42b auf, die die Wechselspannung gleichrichten. Dies geschieht, indem die Schalter 42a, 42b jeweils nur im Wechsel geschlossen werden, wobei das Umschalten im Null-Durchgang erfolgt. Im Gegensatz zu Diodengleichrichtern arbeiten Synchrongleichrichter ohne Flussspannung. Die Ausgangsspannung an den Anschlüssen 40 des Synchrongleichrichters 38 ist eine - wenn auch sehr wellige - Gleichspannung. So wurde insgesamt von den Anschlüssen 28 zu den Anschlüssen 40 elektrische Leistung in Form von einer Gleichspannung über eine induktive Kopplung zwischen zwei Induktionselemente 12, 14 übertragen. Die Ausgangsspannung an den Anschlüssen 40 kann bei Bedarf noch geglättet werden.

Synchrongleichrichter 38 weist wie die Zerhacker-Einheit 32 gesteuerte Schalter auf. Auch für Synchrongleichrichter 38 ist eine - hier ebenfalls nicht dargestellte - Steuerung vorgesehen, die die Schalter 42a, 42b so betätigt, dass das Element 38 als Synchrongleichrichter arbeitet. Insgesamt ist so die gesamte Anordnung symmetrisch aufgebaut, d.h. Primär- und Sekundärseite umfassen jeweils gesteuerte Schalter, die an einen Serienresonanzkreis angeschlossen sind. Deshalb kann mit dieser Anordnung bei entsprechender Ausbildung der Steuerung elektrische Energie sowohl von den Anschlüssen 28 zu den Anschlüssen 40 als auch in umgekehrter Richtung übertragen werden. Bei der Leistungsübertragung in umgekehrter Richtung bewirkt die Steuerung der Einheit 38, dass die Schalter 42a, 42b als Zerhacker arbeiten, während die Steuerung der Einheit 32 die Schalter 30a, 30b so ansteuert, dass die Arbeitsweise eines Synchrongleichrichters entsteht. Hierbei hat es sich als vorteilhaft erwiesen, auch die Induktionselemente 12, 14 und die Kapazitäten 34, 36 gleich auszubilden bzw. zu dimensionieren, was aber nicht unbedingt notwendig ist.

Die tatsächlichen Zahlenwerte für die Bauteilwerte der Elemente des in Fig. 2 dargestellten Systems und für die Betriebsspannungen und -frequenzen hängen vom jeweiligen Einsatzzweck ab und können sehr unterschiedlich sein.

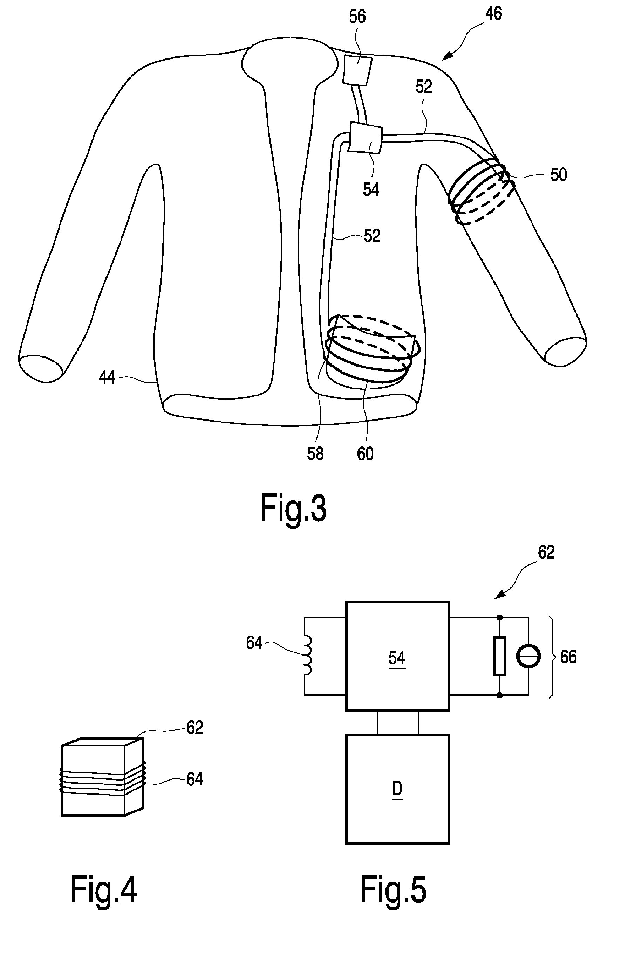

In Fig. 3 ist ein Kleidungsstück 44 dargestellt, in dem eine elektrische Schaltung 46 integriert ist. Die elektrische Schaltung 46 weist Anschlussvorrichtungen 48, 50 auf, die fest im Kleidungsstück integriert sind. Innerhalb des Kleidungsstücks verlaufen ebenfalls zur Schaltung 46 gehörige Leitungen 52, die die Anschlussvorrichtungen 48, 50 mit einem Stromversorgungsmodul 54 verbinden. Das Stromversorgungsmodul 54 ist über Leitungen mit einem fest mit dem Kleidungsstück 44 verbundenen elektrischen Gerät 56, in diesem Fall ein am Kragen angebrachtes Mobiltelefon, verbunden.

Die Anschlussvorrichtung 48 besteht aus Spulenwindungen 58, die um eine Aufnahme, in diesem Fall eine Tasche 60, verlaufen. Die Anschlussvorrichtung dient zur induktiven Ankopplung der Schaltung 46 an ein in der Tasche 60 aufgenommenes transportables elektrisches Gerät 62, das symbolisch in Fig. 4 dargestellt ist. Bei dem Gerät 62 kann es sich um ein Audio-Abspielgerät, einen Taschenrechner, ein Mobiltelefon, ein Datenspeicher, ein Navigationsgerät, eine medizinische Diagnoseeinheit oder ein anderes portables Gerät handeln, das mit elektrischem Strom betrieben wird. Das elektrische Gerät 62 weist eine um das Gehäuse herum verlaufende Spule 64 auf, die zur induktiven Ankopplung dient.

Wie Fig. 5 zeigt, weist das Gerät 62 eine Funktionseinheit D auf, die die eigentliche Funktionseinheit des elektrischen Geräts 62 ist. Weiter verfügt das Gerät 62 über eine Spannungsversorgung 66, beispielsweise eine Batterie oder einen Akkumulator, die hier als Spannungsquelle dargestellt sind Diese Einheiten und die Spule 64 sind an das Stromversorgungsmodul 54 angeschlossen.

Wird das Gerät aus Fig. 4 und Fig. 5 lagerichtig - dh in diesem Fall aufrecht - in die Tasche 60 der Jacke 60 eingesteckt, so entsteht durch die magnetische Kopplung der Spulen 48, 64 ein Übertragungssystem wie oben im Bezug auf Fig. 1 und 2 erläutert. Die Schaltung 46 ist in diesem Fall mit dem Gerät 62 induktiv gekoppelt. Die zusätzlichen elektrischen Elemente, d.h. Schalteinheiten 32 bzw. 38, Kapazitäten 34 bzw. 36 und die notwendige Steuerung ist in den Stromversorgungsmodulen 54 enthalten.

Die Tasche 60 ist hierbei so bemessen und gestaltet, dass nur eine lagerichtige - nämlich aufrechte - Aufnahme des bestimmten tragbaren Geräts 62 möglich ist.

Insgesamt entsteht so ein verteiltes System innerhalb des Kleidungsstücks 44, innerhalb dessen das fest in der Jacke integrierte Gerät 56 mit dem in der Tasche 60 aufgenommenen Gerät 62 gekoppelt ist. Es ist nun möglich, sowohl Energie von der Quelle 66 des Geräts 62 zum Gerät 56 zu übertragen als auch umgekehrt. Bei der Übertragung elektrischer Leistung vom Gerät 62 zum Gerät 56 entnimmt das Stromversorgungsmodul 54 der Quelle 66 elektrische Leistung in Form einer Gleichspannung Durch Zerhacken wird eine Wechselspannung erzeugt, mit der die Spule 64 betrieben wird. In der mit der Spule 64 magnetisch gekoppelten Spule 58, die als sekundäres Induktionselement arbeitet, wird eine elektrische Wechselspannung induziert. Diese wird im Stromversorgungsmodul 54 des Kleidungsstücks 44 gleichgerichtet und zum Gerät 56 übertragen. So kann das Gerät 56 aus der Quelle 66 des Geräts 62 gespeist werden.

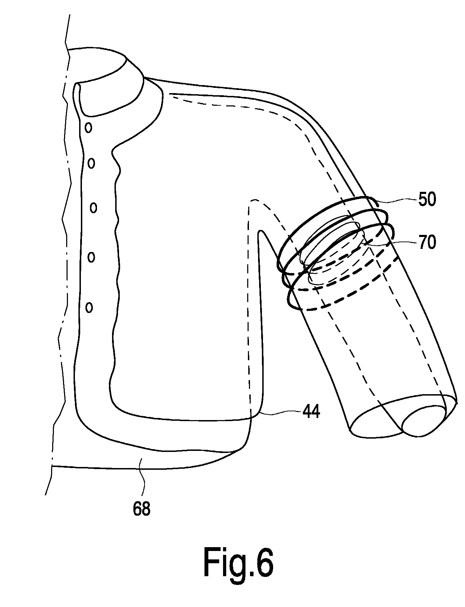

Das Kleidungsstück 44 weist auch eine weitere Anschlussvorrichtung 50 auf, die in diesem Fall als eine Spule ausgestaltet ist, die an einer bestimmten Stelle am Ärmel der Jacke 44 so angeordnet ist, dass die Spulenwindungen um den Ärmel herum verlaufen. Die Anschlussvorrichtung 50 dient zur Ankopplung an ein weiteres Kleidungsstück. Das so entstehende System aus zwei Kleidungsstücken 44, 68 ist in Fig. 6 dargestellt.

Die Jache 44 aus Fig. 3 ist hier dargestellt, wie sie über ein am Hemd 68 am Körper einer - hier nicht dargestellten - Person getragen wird. Beide Kleidungsstücke weisen - nicht dargestellte - elektrische Schaltungen auf. An beiden Kleidungsstücken ist an der selben Stelle des Ärmels jeweils eine Spule 50, 70 angebracht, die jeweils mit den elektrischen Schaltungen verbunden sind. Sind beide Kleidungsstücke in üblicher Weise am Körper der Person angeordnet, ergibt sich die Anordnung aus Fig. 6, bei der die Spulen 50, 70 koaxial ineinander liegen, so dass sie einen hohen Grad an magnetischer Kopplung aufweisen. Das Wicklungsverhältnis der Spulen beträgt bevorzugt 1:1. Hierbei wird ausgenutzt, dass die Lage der jeweiligen Stelle des Ärmels bei bestimmungsgemäßer Verwendung der beiden Kleidungsstücke - hier Hemd und Jacke - relativ genau bekannt ist. Dies gilt auch für eine große Anzahl anderer Paare von Kleidungsstücken, beispielsweise Hose/Gürtel etc.

Die beiden Kleidungsstücke 44, 68 aus Fig. 6 bilden ein System von Kleidungsstücken, wobei elektrische Leistung induktiv von einem Kleidungsstück zum anderen übertragen werden kann. Bei einem solchen Übertragungssystem im Kleidungsbereich wird aufgrund der nie vollständig vorhersehbaren Anordnung stets ein gewisses Maß an Streuinduktivität auftreten, so dass es hier besonders vorteilhaft ist, ein Übertragungssystem wie in den Fig. 1 und 2 beschrieben zu realisieren, das eine Resonanz ausnutzt.

Sowohl die Übertragung zwischen zwei Kleidungsstücken 44, 68 aus Fig. 6 als auch die Übertragung elektrischer Energie zwischen dem Gerät 62 und dem Kleidungsstück 44 aus Fig. 3 unterliegen hierbei gewissen Schwankungen. Dies ergibt sich daraus, dass sich der Träger der Kleidungsstücke bewegt und hierdurch die Kleidungsstücke gegeneinander bzw. das Gerät 62 innerhalb der Tasche 60 leicht verrutscht. Dies hat Auswirkungen auf die Werte für die Streuinduktivitäten L₁, L₂ und Hauptinduktivität M wie in Fig. 2a dargestellt. Daher ist eine - hier nicht näher dargestellte - Regelung vorgesehen, die die Leistungsübertragung dem Grad der sich zeitlich ändernden magnetischen Kopplung jeweils anpasst. Hierzu wird in gleichmäßigen oder ungleichmäßigen Intervallen die Spannung auf der Sekundärseite gemessen und mit einem Sollwert verglichen. Bei einer Abweichung wird die Anregungsfrequenz so verändert, dass sie näher an der Resonanzfrequenz liegt, d.h. an der Frequenz, bei der die Spannungsüberhöhung an der Hauptinduktivität 20, 22 maximal ist. Die Schalteinheiten 32, 38 mit ihren Schaltern 30a, 30b, 42a, 42b werden so betrieben, dass die sekundäre Spannung auf den gewünschten Wert geregelt ist. Hierbei kann eine Anpassung in Intervallen von beispielsweise 200 ms bis 10 s erfolgen, bevorzugt wird eine Anpassung etwa jede Sekunde. Die sekundärseitig ermittelte Regelabweichung wird mit hier nicht dargestellten, unten aber detailliert erläuterten Mitteln an die Steuereinheit des Primärkreises übertragen, so dass diese Steuereinheit die Frequenz entsprechend anpasst und so die Spannung regelt.

In Fig. 7 sind die Elemente eines Übertragungssystems 72 in einer perspektivischen Darstellung zu sehen. Ein erster Transformator 74 wird gebildet von einer äußeren Spule 76, in der eine innere Spule 78 aufgenommen ist. Die äußere Spule 76 ist an ein Stromversorgungsmodul 54a angeschlossen. Die innere Spule 78 ist elektrisch mit Stromversorgungsmodulen 54b, 54c sowie mit einer inneren Spule 80 eines weiteren Transformators 82 verbunden. Der zweite Transformator 82 weist ferner eine äußere Spule 84 auf, die mit einem Stromversorgungsmodul 54d verbunden ist. Bei den Spulen 76, 78, 80, 84 handelt es sich um Axialfeldwicklungen, deren Topologie in Fig. 8 noch einmal dargestellt ist. Die Transformatoren 77, 82 sind aus miteinander nicht fest verbundenen, sondern gegeneinander frei beweglichen Spulen 76, 78; 80, 84 gebildet. Hierbei können die Spulen an - nicht dargestellten - voneinander getrennten Gegenständen wie Jacken- oder Hemdsärmeln (vgl. Fig 6) angebracht sein.

Die Spulen sind als mechanisch flexible Elemente hergestellt, bei denen dünne Kupferschichten auf einem flexiblen Kunststoff-Band aufgebracht sind. Es handelt sich um Kupferbahnen von 35 µm Dicke. Das gesamte Element ist weitgehend flexibel, so dass es sich leicht mit Textilien verbinden lässt, ohne dass es vom Träger eines entsprechenden Kleidungsstücks störend wahrgenommen wird.

Das in Fig. 7 dargestellte System weist vier Stromversorgungsmodule 54a, 54b, 54c, 54d auf. Zwischen diesen Stromversorgungsmodulen wird elektrische Energie in Form von Wechselspannungen übertragen. Man könnte hier von einer Art "power-bus" sprechen. Die Stromversorgungseinhdten 54a bis 54d sind aufgebaut wie die Schaltungen P und S aus Fig. 2, d.h. sie können elektrische Leistung in Form von Wechselspannung vom power-bus entnehmen und in Gleichspannung umwandeln, mit der daran angeschlossene Geräte (hier nicht dargestellt) betrieben werden. Ebenso können die Stromversorgungsmodule 54a bis 54d auch als primärseitige Schaltung P arbeiten, wobei sie einem angsschlossenen Energiespeicher, beispielsweise einer Batterie oder einem Akkumulator (hier nicht dargestellt) elektrische Leistung als Gleichspannung entnehmen und diese in eine Wechselspannung wandeln, die über den power-bus übertragen wird. Hierbei weisen die Stromversorgungs-Module 54a bis 54d Steuereinheiten auf, die die entsprechenden Schalter 30a, 30b, 42a, 42b steuern. Bei der Erzeugung einer Wechselspannung wird - wie oben beschrieben - eine solche Frequenz verwendet, dass die sekundäre Spannung auf einen Sollwert geregelt wird.

Eine Sonderrolle nimmt das Modul 54c ein. Dieses umfasst zwei getrennte Schaltungen P bzw. S, die jeweils mit verschiedenen Transformatoren 74, 84 verbunden sind. Das System kann beispielsweise mit einer an Modul 54b angekoppelten Quelle (z.B. Batterie) und an den Modulen 54a und 54d angekoppelten Verbrauchern (z.B. Audioabspielgeräte und Mobiltelefone) betrieben werden. Dann wird über den Transformator 74 vom Modul 54b zu den Modulen 54a, 54c Leistung übertragen. Das Modul 54a richtet die sekundärseitige Spannung gleich und versorgt daraus den Verbraucher. Das Modul 54c wandelt die entsprechende Wechselspannung in eine Wechselspannung anderer Frequenz, mit der der Transformator 82 betrieben und so die Leistung zum Modul 54d übertragen wird.

In Fig. 9 ist als alternative Wicklungstopologie eine Axial-Radialfeldwicklung mit zwei Polwicklungen dargestellt. Im Gegensatz zur Axialfeldwicklung nach Fig. 8, bei der das Magnetfeld in der Spulenmitte axial verläuft, bildet sich innerhalb der Spulentopologie nach Fig. 9 in der Spulenmitte ein radial nach außen laufendes Magnetfeld Ebenso wie zwei Spulen mit Axialfeldwicklung können auch zwei Spulen mit Radialfeldwicklung in magnetische Kopplung gebracht werden, indem sie koaxial zueinander angeordnet werden. Die Axial-Radialfeldwicklung ist hierbei jedoch deutlich empfindlicher gegenüber axialer Verschiebung Bei der induktiven Kopplung zweier Elemente, bei denen mit einer axialen Verschiebung zu rechnen ist, wird daher eher eine Wicklungstopologie gemäß Fig. 8 zum Einsatz kommen.

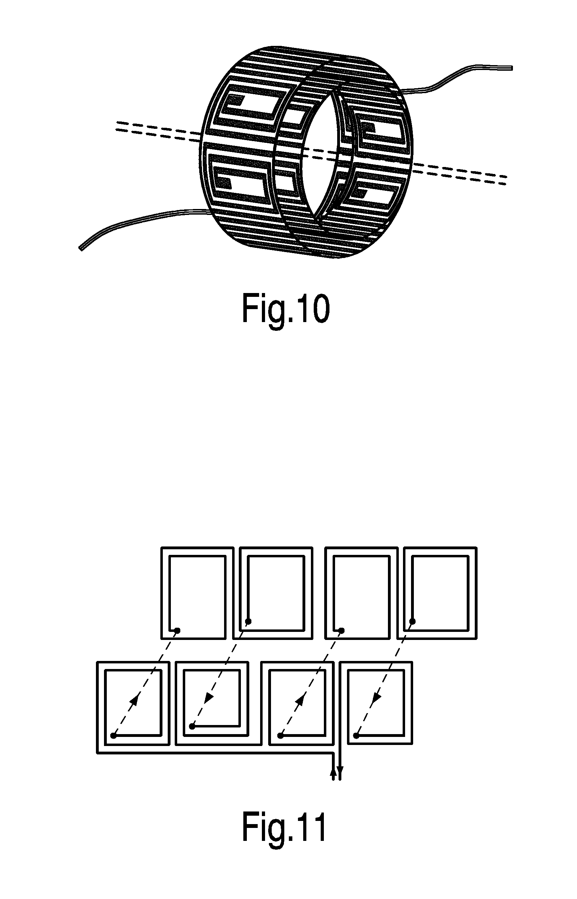

Als Alternative zu den geschlossenen Strukturen gemäß Fig. 8 und 9 wird in den Fig. 10 und 11 eine offene Struktur eines Induktionselements dargestellt. Es handelt sich um eine mehrpolige Radialfeldwicklung, in diesem Fall mit vier Polen. Auch hier ist eine Ausführung mit einer doppelseitig kupferkaschierten flexiblen Leiterplatte dargestellt, wobei die gestrichelten Linien Durchkontaktierungs-Punkte darstellen. Zwei solche Induktionselemente mit übereinstimmender Struktur werden zur Herstellung einer induktiven Kopplung so positioniert, dass sich die Polwicklung gegenüberliegen. Hinsichtlich der Lagetoleranzen beider Elemente ist eine Polwicklung so auszulegen, dass eine axiale (oder im gestreckten Fall eine senkrechte) Verschiebung kleiner ist als die Polwicklungshöhe und eine Verdrehung (oder im gestreckten Fall eine waagerechte Verschiebung) kleiner ist als die Polwicklungsbreite. Die Axialfeldwicklung gemäß Fig. 10 und 11 kann zwar als geschlossene Struktur ausgelegt sein, d.h. dass ein Ring gebildet wird wie in Fig. 10 dargestellt. Die Elemente können aber auch in gestreckter Form einander gegenüberliegend angeordnet werden, ohne dass ein geschlossener Ring entsteht. Damit sind entsprechende Induktionselemente im Kleidungsbereich vor allem dort einsetzbar, wo kein geschlossener Ring gewährleistet werden kann, beispielsweise bei einem Hemdkragen oder einem Gürtel.

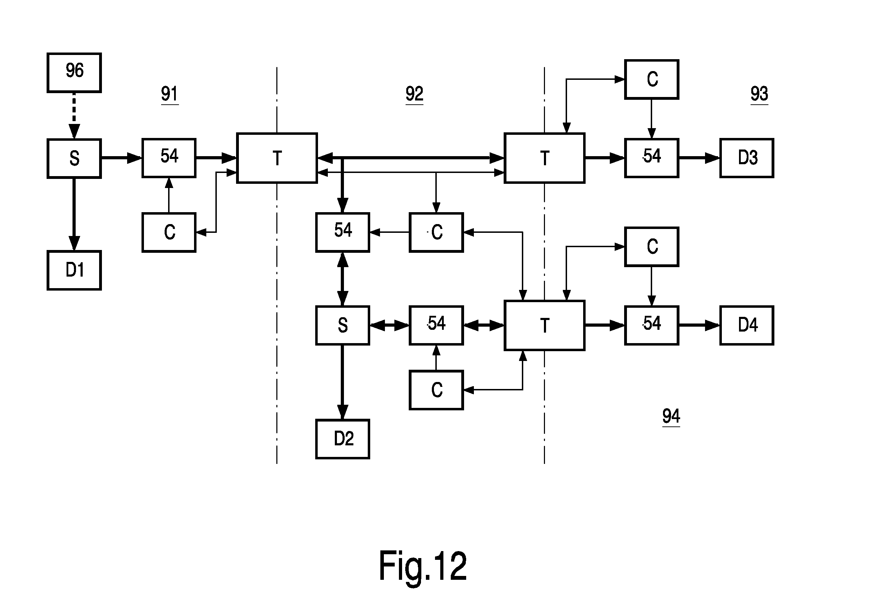

In Fig. 12 ist einer schematischen Darstellung ein verteiltes System aus vier Kleidungsstücken 91, 92, 93, 94 dargestellt, wobei die Bereiche der jeweiligen Kleidungsstücke durch strickpunktierte Linien getrennt sind. Die Kleidungsstücke 91, 92, 93, 94 weisen jeweils elektrische Geräte D1, D2, D3, D4 auf. In den Kleidungsstücken 91 und 92 sind zudem elektrische Energiequellen S vorhanden. Bei den elektrischen Geräten kann es sich um beliebige elektrische Geräte handeln. Vorstehend wurden bereits entsprechende Beispiele genannt.

Die Quellen S des Systems können mit den Geräten verbundene Energiequellen, beispielsweise im Gehäuse der Geräte vorgesehene Batterien oder Akkumulatoren sein. Ebenso könne auch - hier nicht dargestellt - innerhalb der Kleidungsstücke separate Energiespeicher vorgesehen sein, die fest mit dem Kleidungsstück verbunden sind. Sinnvoll ist dies vor allem für wiederaufladbare Energiespeicher, z.B. Akkumulatoren oder Hochkapazitätskondensatoren. Je nach Kleidungsstück können solche Elemente eine unterschiedliche Form aufweisen. Während für textile Kleidungsstücke flächige, möglichst mechanisch flexible Elemente wie folienförmige Akkumulatoren sinnvoll sind, können beispielsweise in den Absätzen von Schuhen herkömmliche Bauformen von Akkumulatoren verwendet werden.

Das System, nach Figur 12 weist an einigen Grenzen zwischen den Kleidungsstücken 91, 92, 93, 94 Transformatoren T auf. Hierbei handelt es sich um Paare von gekoppelten Induktionselementen, wie sie vorstehend schon ausführlich beschrieben worden sind. Die Transformatoren T werden jeweils primär - und sekundärseitig von je einem Stromversorgungsmodul 54 betrieben, das von einer Steuerungseinheit C gesteuert wird.

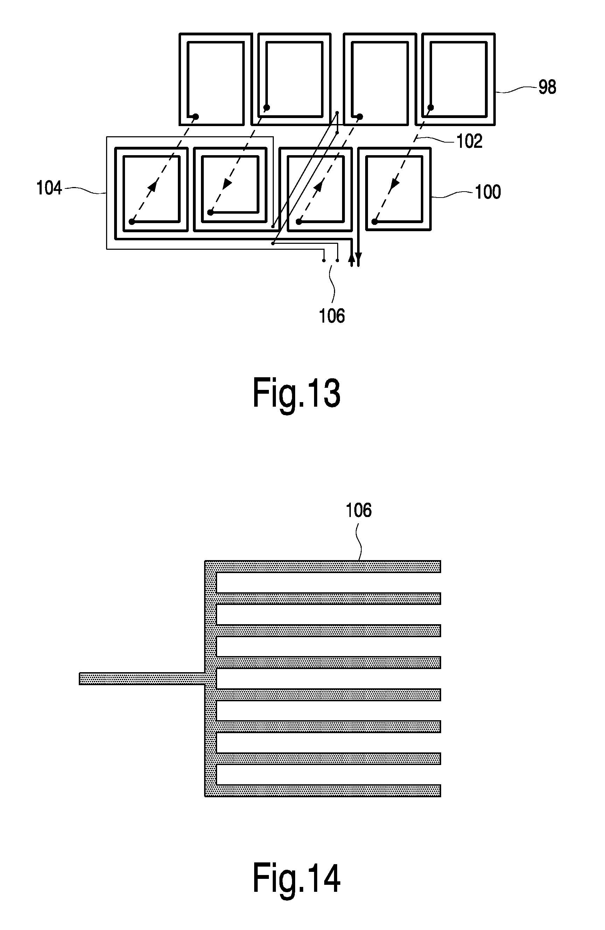

In der Darstellung von Figur 12 wird durch dicke Pfeile die Übertragung elektrischer Leistung angezeigt, während durch dünne Pfeile der Fluss von elektrischen Signalen zu Informationszwecken angezeigt wird. Die Übertragung von Informationssignalen erfolgt ebenfalls drahtlos über die Transformatoren T. Im Zusammenhang mit den Figuren 13 und 14 wird unten noch auf die hierbei verwendeten Vorrichtungen und Verfahren eingegangen.

Informationen werden hierbei zwischen den Steuerungseinheiten C übertragen, die jeweils die Stromversorgungsmodule 54 steuern. Diese Steuereinheiten sind als Mikroprozessorsteuerungen ausgeführt. Die Steuereinheiten C realisieren die oben beschriebene Regelung. Hierbei misst die in einem betrachteten Paar sekundärseitig angeordnete Einheit C die sekundärseitige Spannung und ermittelt eine Regelabweichung. Diese wird - bevorzugt in digitalisierter Form - als Information über den Transformator T an die primärseitige Steuereinheit C übermittelt.

Die primärseitige Steuereinheit führt dann die eigentliche Regelung aus, d.h. sie passt die Stellgröße (primäre Frequenz) wie oben beschrieben so an, dass die Regelgröße (sekundärseitige Spannung) den Sollwert erreicht. Hierbei können die verschiedenen, dem Fachmann hinlänglich bekannten Reglertypen (P, PI, PID usw.) realisiert werden.

Zusätzlich werden die Mikroprozessor-Steuerungseinheiten C, die miteinander in Kommunikationsverbindung sind, auch benutzt, um die Verteilung elektrischer Leistung in dem gebildeten Verbund zu steuern. Hierzu führen sie ein Programm aus, mit dem insgesamt ein Leistungsverteilungskonzept im gesamten System erreicht wird. Dies kann verschiedene Formen annehmen. In der hier vorliegenden Form sieht das übergreifende Konzept vor sicherzustellen, dass die vorhandenen Geräte D1, D2, D3, D4 mit ausreichender elektrischer Leistung versorgt werden, so dass ihre Funktion gewährleistet ist. Zudem sind die jeweiligen Quellen S in den Kleidungsstücken 91 und 92 mit einer Kennung versehen, die die jeweilige Priorität der Quelle angibt, wobei Quellen mit höheren Prioritäten als erstes elektrische Leistung entnommen wird, während Quellen mit niedrigeren Prioritäten nur dann die Energieversorgung übernehmen, wenn andere Quellen ausgefallen sind. Beispielsweise können teure, nicht wiederaufladbare Batterien so als Notfallreserve dienen, wobei im normalen Betrieb elektrische Leistung dann aus einer anderen im System vorhandenen wiederaufladbaren Quelle (mit höherer Priorität) entnommen wird. Die Steuerungseinheiten C tauschen über geeignet definierte Protokolle ihre entsprechenden Informationen aus, so dass das System nach den Vorgaben organisiert wird. Im in Figur 12 dargestellten Fall werden so die Geräte D3 und D4 in den Kleidungsstücken 93 und 94 über die entsprechenden Transformatoren T aus den Quellen S in den Kleidungsstücken 91 und 92 mitversorgt. Hierbei wird die von den Quellen S gelieferte Gleichspannung in den Stromversorgungsmodulen 54 in Wechselspannung gewandelt, die über die Transformatoren T zu den Kleidungsstücken 93 und 94 übertragen wird. Die hierbei verwendeten Vorrichtungen und Verfahren, die der besonderen Situation der Übertragung der elektrischen Leistung zwischen aneinander nicht fixierten Kleidungsstücken Rechnung tragen, sind oben bereits erläutert worden.

Die Geräte D1, D2, D3, D4 können noch Vorrichtungen zur Anpassung der Versorgungsspannung, beispielsweise Längsregler oder DC/DC-Wandler aufweisen.

In Figur 12 ist auch dargestellt, wie die wiederaufladbare Quelle S im Kleidungsstück 91 von einem externen Ladegerät 96 geladen wird. Die wiederaufladbare Quelle S, die beispielsweise ein Akkumulator bekannter Bauform ist, kann selbstverständlich mit bekannten Ladegeräten geladen werden, wobei das Ladegerät 96 durch eine Steckerverbindung mit der Quelle verbunden wird. Wenn die Quelle S aber fest im Kleidungsstück eingebaut ist, also beispielsweise ein Akkumulator bekannter Bauform im Absatz eines Schuhs aufgenommen ist oder ein flächenförmiger, flexibler Akkumulator im Innenfutter einer Jacke enthalten ist, wird auch hier der drahtlose Anschluss eines Ladegeräts bevorzugt. Hierfür können die oben beschriebenen Systeme zur induktiven Leistungsübertragung genutzt werden, wobei eine, einige oder alle Quellen in einem Kleidungsstück geladen werden, indem die induktive Kopplung hergestellt und Leistung vom Ladegerät zu den Quellen übertragen wird. Dies kann geschehen, ohne dass die Quellen aus dem Kleidungsstück entfernt werden. Die Quellen werden beispielsweise geladen, indem eine Jacke über einen kleiderbügelförmigen Induktor gehängt wird, wobei die Jacke beispielsweise an den Schulterstücken entsprechende sekundäre Induktionselemente aufweist, zu denen vom Kleiderbügel-Induktor elektrische Leistung übertragen wird. Die in der Jacke vorhandenen Quellen - ggf. auch externen Quellen, beispielsweise eines in der Tasche 60 aufgenommen elektrischen Geräts 62 - werden dann geladen, wobei ggfs. die Steuerungseinheiten C dafür sorgen, dass die elektrische Leistung an alle zu ladenden Quellen verteilt wird. Die besondere Form des Induktors, der auch als Aufbewahrungselement bzw. Haltevorrichtung für das Kleidungsstück dient, ermöglicht eine besonders komfortable Benutzung eines solchen Verfahrens zum Aufladen der Quellen. Hierbei sind auch andere Ausgestaltungen des Induktors denkbar, beispielsweise als Schuhspanner, der mit einem in einem Schuh angebrachten sekundären Induktionselement einen Transformator bildet, um eine Quelle im Absatz des Schuhs aufzuladen.

In dem durch Kommunikation zwischen den Steuereinheiten C organisierten verteilten System nach Fig 12 ist es auch möglich, dass von einer Quelle mit höherer Priorität Leistung entnommen wird, um andere Quellen zu laden.

Alternativ ist auch das Laden der Quelle über Verfahren mit parasitärer Leistungsaufnahme denkbar, bei denen beispielsweise mechanische Bewegungen, die das Kleidungsstück aufgrund von Bewegungen des Benutzers ausführt oder dessen Körperwärme zur Energiegewinnung genutzt wird. Außerdem ist es auch möglich, Solarzellen zur Energieversorgung zu nutzen.

Wie oben bereits mehrfach erwähnt, sollen über die Transformatoren nicht nur elektrische Leistung zur Energieversorgung sondern auch elektrische Signale zur Übermittlung von Informationen übertragen werden. Dies können einerseits Informationen sein, die von den Steuereinheiten C ausgesendet und empfangen werden und der Organisation des verteilten Systems aus Figur 12 dienen. Andererseits können aber auch Informationen zwischen den Geräten des Systems ausgetauscht werden, beispielsweise Daten von einem Mobiltelefon zu einem Organizer übertragen werden oder ein Audiosignal eines Audio-Abspielgeräts zu einem im Kragen der Jacke integrierten Kopfhörer. Insbesondere ist es - wie oben beschrieben - sinnvoll, die Regelung der Anregungsfrequenz für das jeweils primäre Induktionselement über ein Mittel zur Übertragung von Informationen zu realisieren. So kann vom Sekundärkreis der Messwert für die dort jeweils induzierte Spannung oder die Regelabweichung von einer Sollgröße in den Primärkreis übertragen werden, so dass die primäre Anregungsfrequenz entsprechend eingestellt wird.

Die Übertragung von Informationen erfolgt ebenfalls drahtlos, bevorzugt an denselben Stellen, an denen auch die Leistungsübertragung erfolgt. Hierbei können sehr unterschiedliche Vorrichtungen und Verfahren eingesetzt werden. Zum einen ist eine entsprechende Modulation der über die Transformatoren T übertragenen Versorgungsspannungen möglich. Hierbei ist primärseitig ein entsprechender Modulator und sekundärseitig ein entsprechender Demodulator vorgesehen. Aufgrund der variablen magnetischen Kopplung sind insbesondere bei geregelter Übertragungsfrequenz hierbei jedoch sehr starke Störungen zu erwarten, so dass diese Lösung wohl nur in wenigen geeigneten Fällen zum Tragen kommen wird. Eine weitere Möglichkeit zur Signalübertragung stellt die Übertragung per Funk dar. Aufgrund der möglichen Störungen und des Schaltungsauswandes wird dies jedoch hier ebenfalls nicht bevorzugt.

Vorgeschlagen wird daher Informationsübertragung entweder über eine zusätzliche induktive Kopplung oder eine kapazitive Kopplung. Bei einer zusätzlichen induktiven Kopplung sind zusätzliche, speziell für die Informationsübertragung vorgesehene Induktionselemente primär- und sekundärseitig vorgesehen. Diese sind so ausgebildet oder angeordnet, dass die Informationsübertragung von der Leistungsübertragung unabhängig ist und möglichst wenig Störungen auftreten.

Dies kann durch spezielle Ausgestaltung der Induktionselemente erreicht werden. Beispielsweise bei der Verwendung einer Axialfeldwicklung nach Fig. 8 für die Leistungsübertragung und einer Axial-Radialfeldwicklung nach Fig. 9 für die Informationsübertragung sind die hiervon jeweils erzeugten Felder weitgehend unabhängig, so dass sich die beiden Übertragungen nur geringfügig beeinflussen. Dem Fachmann sind weitere Kombinationen zueinander orthogonaler Induktortopologien bekannt.

Eine weitere Möglichkeit ist in Fig. 13 dargestellt. Es handelt sich um die vierpolige Radialfeldwicklung aus Fig. 11, bei der beidseitig auf einem Träger die dargestellten Radialfeldwicklungen 98 auf der einen und 100 auf der anderen Seite des Trägers angebracht sind. Durchkontaktierungen 102 verbinden die Radialfeldwicklungen 98, 100. Zur Datenübertragung wird eine ebenfalls auf dem Träger ausgebildete Wicklung 104 verwendet, die eigene Anschlüsse 106 aufweist und von den Wicklungen 98, 100 elektrisch vollständig isoliert ist, räumlich jedoch direkt überlagert wird. Hierbei schließt die Wicklung 104 zwei der vier Polwicklungen 100 ein, wobei sich innerhalb der enthaltenen Fläche die Beiträge der jeweils in entgegengesetzter Richtung gewickelten eingeschlossenen Polwicklungen fast vollständig aufheben. Das durch einen Stromfluss durch die Wicklungen 98, 100 erzeugte Magnetfeld hat somit keinen bzw. nur einen äußerst geringen Anteil innerhalb der durch die zusätzliche Wicklung 104 umschlossenen Fläche. So kann die Wicklung 104 zur von der induktiven Leistungsübertragung weitgehend unbeeinflussten induktiven Übertragung von elektrischen Signalen genutzt werden. Eine solche Orthogonalität ist selbstverständlich nicht auf die in Fig. 13 dargestellte Anordnung begrenzt, sondern kann auch für sehr unterschiedliche Strukturen hergestellt werden, indem beispielsweise verschiedene Polteilungen für den Leistungstransformator einerseits und den Signalübertragungstransformator andererseits gewählt werden.

Eine andere vorgeschlagene Möglichkeit zur Übertragung von elektrischen Signalen ist eine kapazitive Kopplung. Diese kann beispielsweise in Form eines Metallisierungsstreifens oberund/oder unterhalb der Wicklungen für die Leistungsübertragungbestehen, die sowohl primär- als auch sekundärseitig vorgesehen sind. Diese beiden Metallisierungsstreifen bilden so eine lange parallel laufende Leiterbahn mit entsprechendem hohen kapazitiven Übersprechen. Während eine solche Anordnung in herkömmlichen Layouts unerwünscht ist, kann der Effekt des kapazitiven Übersprechens hier zur Datenübertragung sinnvoll genutzt werden.

Die kapazitive Kopplung kann prinzipiell über beliebig geformte Flächen hergestellt werden, wobei jeweils mindestens eine Fläche primär- und sekundärseitig vorgesehen ist und sich die Flächen bei geringem Abstand - bis zu 10 cm, bevorzugt weniger als 3 cm, besonders bevorzugt weniger als 1 cm - mindestens teilweise überlappen. Die elektrisch leitfähigen Flächen können vorteilhaft als Metallflächen ausgebildet sein, die allerdings voneinander isoliert sein sollten. Es ist sinnvoll, diese Flächen nahe am Leistungstransformator anzuordnen, allerdings sollte dann darauf geachtet werden, dass eventuelle Wirbelstromverluste in metallischen Flächen innerhalb eines Magnetfeldes minimiert werden. Hierzu zeigt Fig 14 eine Interdigitalstruktur für ein kapazitives Kopplungselement mit länglichen Bereichen 106 die über ihre Länge zueinander elektrisch isoliert sind. Diese kann als Metallschicht auch auf einem flexiblen Kunststoffsubstrat aufgebracht sein. Um eine geschlossene Fläche zu erhalten, kann jeweils auf Vorder- und Rückseite des Substrats eine Struktur, wie in Fig 14 gezeigt, aufgebracht werden, wobei die Strukturen so um eine Fingerbreite nach oben bzw. nach unten gegeneinander verschoben angeordnet werden, dass sie eine versetzte Anordnung bilden, die insgesamt die Funktion einer geschlossenen Fläche erfüllen kann, bei der aber Wirbelstromverluste minimiert sind.

Die Erfindung lässt sich zusammenfassen als ein System zur elektrischen Übertragung im Kleidungsbereich und einen entsprechenden Übertrager hierfür. Elektrische Schaltungen in Kleidungsstücken werden mit elektrischen Geräten und/oder elektrischen Schaltungen in anderen Kleidungsstücken drahtlos, bevorzugt induktiv gekoppelt, wobei über die Kopplung elektrische Leistung übertragen wird. Bevorzugt ist Leistungsübertragung in beide Richtungen möglich, wobei ein verteiltes System mit Quellen und Geräten entsteht, die miteinander koppelbar sind. Die Effizienz der induktiven Energieübertragung wird durch Regelung der Frequenz erhöht, bevorzugt unter Ausnutzung einer Resonanz. Zusätzlich werden Mittel zur Informationsübertragung vorgeschlagen.

## Patentansprüche

1. System zur drahtlosen Übertragung elektrischer Leistung mit
- mindestens einem ersten Induktionselement (12), das an einen Primärkreis (P) angeschlossen ist,
- und mit mindestens einem zweiten Induktionselement (14), das an einen Sekundärkreis (S) angeschlossen ist,
- wobei die Induktionselemente (12), (14) in ihrer Lage zueinander beweglich sind und zueinander so positionierbar sind, dass sie magnetisch gekoppelt sind,
- wobei im Primärkreis (P) Mittel (32) zur Versorgung des ersten Induktionselements (12) mit einer Wechselspannung vorgesehen sind,
- so dass in dem ersten Induktionselement (12) ein magnetisches Feld erzeugt wird, wobei durch die magnetische Kopplung mit dem zweiten Induktionselement (14) eine Spannung im Sekundärkreis (S) induziert wird,
**dadurch gekennzeichnet,**
**dass** im Primärkreis (P) Mittel zur Einstellung der Frequenz der Wechselspannung vorgesehen sind.

2. System nach Anspruch 1, bei dem
- mindestens der Primärkreis (P) als Resonanzkreis ausgelegt ist,
- und die Frequenz der Wechselspannung so eingestellt wird, dass durch Resonanz eine Spannungsüberhöhung am Induktionselement (12) auftritt.

3. System nach Anspruch 2, bei dem eine Regelung der Sekundärspannung vorgesehen ist, wobei die Sekundärspannung durch Einstellung der Frequenz der primärseitigen Wechselspannung geregelt wird.

4. System, nach einem der vorhergehenden Ansprüche, bei dem im Sekundärkreis (S) Mittel (38) zur Gleichrichtung der induzierten Spannung vorgesehen sind.

5. System nach einem der vorhergehenden Ansprüche, bei dem
- sowohl im Primärkreis (P) als auch im Sekundärkreis (S) gesteuerte Schaltmittel (32, 38) vorgesehen sind,
- wobei die Schaltmittel (32, 38) so ansteuerbar sind, dass sie aus einer zugeführten Gleichspannung eine Wechselspannung erzeugen,
- und die Schaltmittel (32, 38) bei anderer Ansteuerung als Synchrongleichrichter arbeiten, die eine zugeführte Wechselspannung gleichrichten.

6. System nach einem der vorangehenden Ansprüche, bei dem
- das erste Induktionselement (12) an einem ersten Gegenstand angeordnet ist,
- und das zweite Induktionselement (14) an einem zweiten Gegenstand angeordnet ist,
- wobei die Gegenstände in ihrer Lage zueinander veränderlich sind,
- und wobei zusätzlich Mittel (104) zur drahtlosen Übertragung von Informationen zwischen den Gegenständen vorgesehen sind.

7. System nach Anspruch 6, bei dem die Mittel zur drahtlosen Übertragung von Informationen mindestens ein drittes und viertes Induktionselement (104) aufweisen, wobei die dritten und vierten Induktionselemente zu den ersten und zweiten Induktionselementen (12, 14) orthogonal ausgsstaltet und/oder angeordnet sind.

8. System nach Anspruch 6, bei dem
- am ersten und am zweiten Gegenstand jeweils eine erste und eine zweite elektrisch leitende Fläche angeordnet ist,
- wobei die Gegenstände so positionierbar sind, dass die Flächen kapazitiv gekoppelt sind.

9. System nach Anspruch 8, bei dem die Flächen aus voneinander über ihre Länge elektrisch isolierten Längsbereichen (106) bestehen, wobei die Längsbereiche (106) an mindestens einem Ende elektrisch verbunden sind.

10. Kleidungsstück mit
- einer elektrische Schaltung (46) mit mindestens einer Anschlussvorrichtung (48, 50) zum elektrischen Anschluss mindestens einer elektrischen Einheit (62),
**dadurch gekennzeichnet,**
**dass**
- die Anschlussvorrichtung (48, 50) drahtlos elektrische Leistung und/oder elektrische Signale zu einer entsprechenden weiteren Anschlussvorrichtung (64) an der elektrischen Einheit (62) überträgt und/oder von der elektrischen Einheit (62) empfängt.

11. Kleidungsstück nach Anspruch 10, bei dem die Anschlussvorrichtung (48, 50) Mittel zur induktiven Ankopplung (12, 58) aufweist.

12. Kleidungsstück nach Anspruch 11, bei dem
- mindestens eine Aufnahme (60) zur Halterung eines tragbaren elektrischen Geräts (62) vorgesehen ist,
- wobei das Induktionselement (58) so im Bereich der Aufnahme (60) angeordnet wird, dass es mit einem am Gerät (62) angebrachten zweiten Induktionselement (64) induktiv gekoppelt ist,
- wenn das Gerät (62) an der Aufnahme (60) gehalten ist.

13. Kleidungsstück nach einem der Ansprüche 10-12, bei dem das Kleidungsstück (44) mindestens eine elektrische Leitung (52) aufweist, mit der die Anschlussvorrichtung (48, 50) an andere elektrische Einheiten (48, 50, 56) angeschlossen ist.

14. Kleidungsstück nach einem der Ansprüche 10-13, bei dem mit dem Kleidungsstück (44) fest verbundene elektrische Einheiten, insbesondere elektrische Geräte (56) und/oder Energiespeicher (S) vorgesehen sind

15. Kleidungsstück nach einem der Ansprüche 10-14, bei dem das Induktionselement (76, 78, 80, 84) ein flächiger, mechanisch flexibler Induktor ist.

16. Kleidungsstück nach einem der Ansprüche 10-15, bei dem das Induktionselement ein Teil eines Übertragungssystems nach einem der Ansprüche 1-9 ist.

17. System von Kleidungsstücken nach einem der Ansprüche 10 - 16, bei dem
- mindestens zwei Kleidungsstücke (44, 68) vorgesehen sind, bei denen
- am ersten Kleidungsstück (44) an mindestens einer ersten Stelle mindestens eine Anschlussvorrichtung (50) zur drahtlosen Übertragung von elektrischer Energie vorgesehen ist,
- und am zweiten Kleidungsstück (68) an mindestens einer zweiten Stelle mindestens eine zweite Anschlussvorrichtung (70) zur drahtlosen Übertragung von elektrischer Energie vorgesehen ist,
- wobei die erste und die zweite Stelle so gewählt sind, dass beim Gebrauch der Kleidungsstücke (44, 68) die Kleidungsstücke (44, 68) so angeordnet sind, dass die Anschlussvorrichtungen (50, 70) eine solche Lage zueinander haben, dass drahtlos elektrische Leistung zwischen den Anschlussvorrichtungen (50, 70) übertragen werden kann.

18. Verfahren zum Übertragen von Signalen und/oder elektrischer Leistung von einer ersten elektrischen Einheit zu einer zweiten elektrischen Einheit, bei dem
- die elektrischen Einheiten (D1, D2, D3, D4, S) an mindestens einem Kleidungsstück (91, 92, 93, 94) angeordnet sind,
- wobei mindestens eine erste elektrische Einheit (D1, D2, D3, D4, S) induktiv mit einer elektrischen Schaltung des Kleidungsstücks gekoppelt ist,
- und über die induktive Kopplung elektrische Signale und/oder elektrische Leistung von der ersten elektrischen Einheit (D1, D2, D3, D4, S) zu einer anderen elektrischen Einheit (D1, D2, D3, D4) übertragen wind.

19. Verfahren nach Anspruch 18, bei dem ein System nach einem der Ansprüche 1-9 und/oder ein Kleidungsstück nach einem der Ansprüche 10-16 verwendet wird.
